# EUROPÄISCHE PATENTSCHRIFT

(11) **EP 3 828 584 B1**
(45) Veröffentlichungstag und Bekanntmachung des Hinweises auf die Patenterteilung: **23.11.2022**
(21) Anmeldenummer: 20191524.6
(22) Anmeldetag: 18.08.2020
(51) Int. Cl.: G01S 5/02, G01S 5/18, G01S 13/08, G01S 13/10, G01S 13/74, G01S 13/86, G01S 17/00, G01S 13/91, G01S 13/931, G01S 15/931, G01S 17/894, G01S 17/931

(54) **SICHERHEITSSYSTEM**
SAFETY SYSTEM
SYSTÈME DE SÉCURITÉ

(30) Priorität: 26.11.2019 DE 102019132024
(43) Veröffentlichungstag der Anmeldung: 02.06.2021
(73) Patentinhaber: SICK AG, 79183 Waldkirch (DE)
(72) Erfinder: Brunner, Fabio, 79100 Freiburg (DE); Hammes, Markus, 79117 Freiburg (DE); Ams, Mathias, 79211 Denzlingen (DE)

(56) Entgegenhaltungen:
- WO-A1-2016/032678
- WO-A1-2019/048260
- DE-A1-102017 203 653

## Beschreibung

Die vorliegende Erfindung betrifft ein Sicherheitssystem zur Lokalisierung einer bewegbaren Maschine gemäß dem Oberbegriff von Anspruch 1.

In Anwendungen mit bewegbaren Maschinen, also insbesondere autonomen mobilen Maschinen bzw. führerlosen Fahrzeugen gibt es die Herausforderung, eine Position der bewegbaren Maschine exakt zu kennen, da anhand der Position beispielsweise das Umschalten von Schutzeinrichtungen erforderlich ist.

Das Umschalten der Schutzeinrichtung ist beispielsweise erforderlich, da sich die funktionale Sicherheit situativ an die Anforderung der Anwendung anpassen muss. Beispielsweise ist eine Primärschutzfunktion, z. B. eine Personendetektion mittels sicherem Laserscanner ungeeignet, da diese die Automatisierungsanwendung stören würde.

Beispielsweise fährt ein autonomes Fahrzeug ohne Spurführung, sondern mittels einer Kartennavigation durch eine Industrieanlage. Ein eigensicherer Laserscanner übernimmt eine Primärschutzfunktion, d. h. eine Personendetektion und stoppt dann ggf. das autonome Fahrzeug. An Engstellen, Übergabestellen usw. muss die Sicherheitsfunktion des autonomen Fahrzeugs angepasst werden, da sonst Prozessstillstände drohen, da an den Engstellen oder Übergabestellen ein Schutzfeld der Primärschutzfunktion unterbrochen wird.

Die DE 10 2017 203 653 A1 offenbart ein Verfahren zur Positionsbestimmung einer Kinematik einer Maschine, wobei die Kinematik gegenüber einem die Positionsbestimmung durchführenden Maschinenbereich peripher angeordnet ist, und wobei es zu Betriebssituationen der Maschine kommt, in denen zwischen der Kinematik und dem die Positionsbestimmung durchführenden Maschinenbereich keine signaltechnische Verbindung möglich ist, wobei die Position der Kinematik anhand eines von dem die Positionsbestimmung durchführenden Maschinenbereich durchgeführten direkten signaltechnischen Messverfahrens ermittelt wird, dass die Position der Kinematik in Betriebssituationen der Maschine, in denen keine signaltechnische Verbindung möglich ist, anhand eines indirekten Messverfahrens ermittelt wird, wobei anhand des direkten Messverfahrens und anhand des indirekten Messverfahrens ermittelte Positionsdaten zur Positionsbestimmung der Kinematik gemeinsam ausgewertet werden.

Die WO 2019/048260 A1 offenbart Innenraum-Ortungssystem zur Unterstützung einer Fertigungssteuerung von Prozessabläufen bei einer industriellen Fertigung von Werkstücken in einer Produktionsstätte, insbesondere in der Metall- und/oder Blechverarbeitung, aufweisend:
a) mehrere mobile Sende-Empfangseinheiten,
b) eine Analyseeinheit, die dazu ausgebildet ist,
   aus Laufzeiten der elektromagnetischen Signale zwischen Sende- Empfangseinheiten die Position der zu ortenden mobilen Sende-Empfangseinheit in einem Positionsbestimmungsvorgang zu bestimmen, um eine Nachverfolgung einer Bewegung eines Zielobjekts aus der Gruppe von Objekten, dem die zu ortende mobile Sende-Empfangseinheit zugeordnet ist, durchzuführen, und
c) eine Energieverbrauchssteuerungseinheit, die ausgebildet ist
   ein Steuerungssignal zur Deaktivierung des Ortungsmodus des Positionssignalmoduls mindestens einer der mobilen Sende-Empfangseinheiten auszugeben, wenn ein Mitwirken der mindestens einen mobilen Sende- Empfangseinheit an Positionsbestimmungsvorgängen nicht erforderlich ist, um so insbesondere den Energieverbrauch der mindestens einen der mobilen Sende-Empfangseinheiten zu reduzieren.

Gemäß der WO 2016/032678 A1 werden ein Verfahren, eine Hardware, eine Vorrichtung, ein Computerprogramm und eine Vorrichtung zum Positionieren mobiler Vorrichtungen an nicht kartierten Orten basierend auf Bewegungssensor- und Hochfrequenzmessungen beschrieben. Ein Referenzfunksignal wird von einem Sender mit unbekannter absoluter Position empfangen und eine Referenzentfernungsmessung wird berechnet. Bewegungssensordaten des Mobilgeräts werden verwendet, um eine relative Position des Mobilgeräts zu schätzen. Ein Beispiel-Funksignal wird von dem Sender mit einer unbekannten absoluten Position empfangen und eine Beispiel-Entfernungsmessung wird berechnet. Die Referenzbereichsmessung und die Probenbereichsmessung werden verglichen. Die geschätzte bewegungssensorbasierte Position wird gemäß dem Ergebnis des Vergleichs angepasst.

Eine Aufgabe der Erfindung besteht darin, eine Lösung für die oben genannten Anwendungen bereitzustellen.

Die Aufgabe wird gemäß Anspruch 1 gelöst durch ein Sicherheitssystem zur Lokalisierung einer bewegbaren Maschine, mit einer Sicherheitssteuerung, mit mindestens einem Funkortungssystem, mit mindestens einem Sensor zur Positionsbestimmung, wobei das Funkortungssystem stationär angeordnete Funkstationen aufweist, wobei an der bewegbaren Maschine mindestens ein Funktransponder angeordnet ist oder wobei das Funkortungssystem stationär angeordnete Funktransponder aufweist, wobei an der bewegbaren Maschine mindestens drei Funkstationen angeordnet sind, wobei mittels dem Funkortungssystem Positionsdaten der bewegbaren Maschine ermittelbar sind, wobei die Positionsdaten von der Funkstation oder dem Funktransponder des Funkortungssystems an die Sicherheitssteuerung übermittelbar sind, und mittels dem Sensor Positionsdaten der bewegbaren Maschine ermittelbar sind, wobei die Sicherheitssteuerung ausgebildet ist die Positionsdaten des Funkortungssystems und die Positionsdaten des Sensors zu vergleichen und bei einer Übereinstimmung geprüfte Positionsdaten gebildet werden, wodurch die Position durch ein redundantes und diversitäres System bestimmt wird, wobei Ausgänge der Sicherheitssteuerung redundante Sicherheitsausgänge sind, wobei der Sensor zur mindestens flächigen Überwachung eines Überwachungsbereiches ausgebildet ist und/oder der Sensor zur mindestens räumlichen Überwachung eines Überwachungsbereiches ausgebildet ist, wobei das Funkortungssystem ein Ultrabreitband- Funkortungssystem ist, wobei die verwendete Frequenz im Bereich von 3,1 GHz bis 10,6 GHz ist, wobei die Sendeenergie pro Funkstation maximal 0,5 mW beträgt.

Bei der bewegbaren Maschine bzw. mobilen Maschine kann es sich beispielsweise um ein führerloses Fahrzeug, fahrerloses Fahrzeug bzw. autonomes Fahrzeug, um ein automatisch geführtes Fahrzeug (Automated Guided Vehicles, AGV), um ein automatisch mobilen Roboter (Automated Mobile Robots, AMR), um ein industriemobilen Roboter (Industrial Mobile Robots, IMR) oder um einen Roboter mit bewegbaren Roboterarmen handeln. Die bewegbare Maschine weist somit einen Antrieb auf und kann in verschiedenen Richtungen bewegt werden.

Das Sicherheitssystem wird mindestens durch die Sicherheitssteuerung, das Funkortungssystem und den Sensor gebildet.

Die Positionsdaten von dem Funkortungssystem werden an die Sicherheitssteuerung der bewegbaren Maschine übermittelt. Damit können in der Sicherheitssteuerung die Positionsdaten des Funkortungssystems und die Positionsdaten des optoelektronischen Sensors verglichen werden und bei einer Übereinstimmung beispielsweise geprüfte Positionsdaten gebildet werden. Die geprüften Positionsdaten können dann von der Sicherheitssteuerung weiterverarbeitet werden.

Die Sicherheitssteuerung weist Eingänge, eine Verarbeitungseinheit und Ausgänge auf. An die Eingänge ist der Sensor angeschlossen. Die Ausgänge sind mit Funktionseinheiten wie dem Antrieb, den Bremsen und/oder der Lenkung der bewegbaren Maschine verbunden. Die Sicherheitssteuerung kann eine modulare Sicherheitssteuerung sein die über eine Software programmierbar ist.

Eine Sicherheitssteuerung kann beispielsweise nur binäre Eingänge aufweisen. Dabei werden die Signale, insbesondere Positionssignale des angeschlossenen Sensors binär übertragen. Auch die Signale, insbesondere Positionssignale des Funkortungssystems werden binär übertragen.

Der Sensor und das Funkortungssystem messen den Winkel bzw. die Richtung zu einem Objekt und die Entfernung zum Objekt. Damit kann der Sensor auch als Ortungssensor bezeichnet werden.

Der Sensor kann auch direkt an ein Navigationssystem angeschlossen sein, wobei das Navigationssystem mit der sicheren Steuerung verbunden ist. Dabei werden die Sensordaten des Sensors vom Navigationssystem verarbeitet und gebildete Positionsdaten an die Sicherheitssteuerung übertragen.

Jedoch kann die Sicherheitssteuerung auch Eingänge bzw. Schnittstellen aufweisen, wobei Daten, beispielsweise Datenbytes mit komplexeren Datenstrukturen eingelesen werden können.

Die Funkortung basiert dabei beispielsweise auf einer Triangulation von mindestens einem Funktransponder an der bewegbaren Maschine. Hierzu sind mindestens drei Funkstationen notwendig die den Funktransponder erfassen können. Dabei ist dem Funkortungssystem der Abstand zwischen den zwei Funkstationen bekannt.

Oder die Funkortung basiert auf einer Triangulation, wobei das Funkortungssystem stationär angeordnete Funktransponder aufweist, wobei an der bewegbaren Maschine mindestens drei Funkstationen angeordnet sind.

Es handelt es sich vorzugsweise um ein Echtzeitortungssystem oder der englischen Entsprechung RTLS (Real-Time-Locating-System). Dabei sind die Funktransponder an der bewegbaren Maschine angeordnet. Feste Referenzpunkte, nämlich die Funkstationen erhalten optional die Funksignale von den Funktranspondern und können so deren Position und damit die Position des Fahrzeugs bestimmen.

Dabei werden wobei die Positionsdaten von dem Funkortungssystem, nämlich den Funkstationen an die Sicherheitssteuerung übermittelt.

Es kann auch ein lokaler Positioniermodus vorgesehen sein (Local-Position-System-Mode, LPS-Mode. Dabei wird ähnlich zu einem GPS-System (Global Positioning System) die Position bestimmt. Dabei empfangend die Funktransponder Funksignale von verschiedenen bekannten Funkstationen zu bestimmten Zeitpunkten. Basierend auf der Ortsinformation der Funkstationen und den Zeitpunkten der Funksignale kann die Sicherheitssteuerung die Position der bewegbaren Maschine ermitteln, wobei die Funktransponder an dem Fahrzeug angeordnet sind und die Funkstationen stationär angeordnet sind.

Dabei werden wobei die Positionsdaten von dem Funkortungssystem, nämlich den Funktranspondern an die Sicherheitssteuerung übermittelt.

Bei dem Funkortungssystem kann es sich auch um Funkfrequenzen von Funknetzwerken wie WLAN oder Wi-Fi handeln. Beispielsweise wird ein 2,4 GHz oder ein 5 GHz Band bei einer Bandbreite von 20 MHz oder 40 MHz verwendet.

Bei dem Funkortungssystem kann es sich auch um Funkfrequenzen von Funkverbindungen wie Bluetooth handeln. Dabei werden Funkfrequenzen von 2,402 und 2,480 GHz verwendet. Der Vorteil dieser Frequenzen ist, dass diese weltweit zulassungsfrei betrieben werden dürfen. Je nach verwendeter Leistung können dabei Reichweiten von 0 bis 100 m erreicht werden. Die Reichweiten und die zugehörigen maxmalen Leistungen sind in Klassen 1 bis 3 eingeteilt.

Der Sensor ist beispielsweise dazu ausgebildet Reflektoren zu detektieren die an bestimmten Positionen befestigt sind, so dass bei der Detektion von mindestens einem Reflektor die Position der bewegbaren Maschine durch den an der Sicherheitssteuerung angeschlossenen Sensor festgestellt werden kann.

Die Reichweite eines derartigen Funkortungssystems beträgt beispielsweise 0 bis 50 m. Dabei wird die kurze zeitliche Dauer der Funkpulse für die Ortung benutzt.

Das Funkortungssystem sendet damit nur Funkwellen mit einer niedrigen Energie aus. Das System ist sehr flexibel einsetzbar und weist keine Interferenzen auf.

Auf dem Fahrzeug muss minimal nur ein einziger Funktransponder angeordnet sein, der von mindestens drei stationär angeordneten Funkstationen erfasst wird, wobei der Abstand der Funkstationen bekannt ist.

Vorzugsweise sind eine Vielzahl, beispielsweise mehr als drei Funkstationen angeordnet, welche mindestens einen Teil des Bewegungsbereichs der bewegbaren Maschine überwachen.

Es können auch mindestens zwei oder mehr Funktransponder an der bewegbaren Maschine angeordnet sein. Dadurch kann die Position des Fahrzeuges genauer identifiziert werden und auch die Ausrichtung des Fahrzeuges im Stillstand erfasst werden, wenn die Anordnung der Funktransponder am Fahrzeug bekannt ist.

In Weiterbildung der Erfindung ist der Sensor ein optoelektronischer Sensor. Bei dem optoelektronischen Sensor handelt es sich beispielsweise um einen Lichtlaufzeitsensor oder beispielsweise ein Triangulationssensor.

Bei einem Lichtlaufzeitsensor wird das von einem Lichtsender ausgesendete Licht welches von einem Objekt remittiert wird von einem Lichtempfänger empfangen und die Lichtlaufzeit vom Aussenden bis zum Empfangen von dem Objekt wird ausgewertet, wodurch die Entfernung zu dem Objekt bestimmt werden kann.

Jedoch kann der Sensor auch ein Ultraschallsensor, oder ein Radar-Sensor sein.

Ein Ultraschallsensor sendet Ultraschall aus und wertet die reflektierten Schallwellen, also die Echosignale aus. Dabei werden Frequenzen ab 16 kHz verwendet. Dabei können Detektionsreichweiten von wenigen Zentimetern bis vielen Metern realisiert werden.

Ein Radarsensor ist ein Sensor, der ein sogenanntes Primärsignal als gebündelte elektromagnetische Welle aussendet, die von Objekten reflektierten Echos als Sekundärsignal empfängt und nach verschiedenen Kriterien auswertet. Dabei handelt es sich um eine Ortung, nämlich der Bestimmung von Entfernung und Winkel.

Aus den empfangenen, vom Objekt reflektierten Wellen können Positionsinformationen bzw. die Position gewonnen werden: Wie bereits erwähnt kann der Winkel bzw. die Richtung zum Objekt und die Entfernung zum Objekt aus der Zeitverschiebung zwischen Senden und Empfangen des Signals ermittelt werden. Weiter kann auch die Relativbewegung zwischen Sender und Objekt festgestellt werden, beispielsweise durch eine einfache Mehrfachmessung in zeitlichen Abständen. Das Aneinanderreihen einzelner Messungen liefert die Wegstrecke und die Absolutgeschwindigkeit des Objektes. Bei guter Auflösung des Radarsensors können Konturen des Objektes erkannt werden.

Eine Abstrahlung von dem Radarsensor erfolgt beispielsweise aufgrund des Antennenentwurfs weitgehend gebündelt in eine Richtung. Die Strahlungscharakteristik der Antenne hat dann eine sogenannte Keulenform.

Die Wellenlänge des Radars liegt im Bereich der Funkwellen im Kurz- bis Mikrowellenbereich. Ein Pulsradarsensor sendet Impulse mit einer typischen Dauer im unteren Mikrosekundenbereich und wartet dann auf Echos. Die Laufzeit des Impulses ist die Zeit zwischen dem Senden und dem Empfang des Echos. Sie wird zur Entfernungsbestimmung genutzt.

Eine Richtung des Abtaststrahles eines Impulsradarsensors kann statt durch die Ausrichtung der Antenne bzw. der Antennen auch elektronisch durch phasengesteuerte Antennenarrays bewirkt werden. Damit können in schnellem Wechsel mehrere Objekte angepeilt und quasi simultan verfolgt werden.

Der Radarsensor arbeitet mit einer Leistung von beispielsweise ca. 10 mW. Diese Leistung ist so gering, dass keine gesundheitlichen Auswirkungen bestehen. Die für diese Anwendung zugelassene Radarfrequenz liegt beispielsweise im Bereich von 76-77 GHz, entsprechend einer Wellenlänge von etwa 4 mm.

Gemäß der Erfindung ist der Sensor zur mindestens flächigen Überwachung eines Überwachungsbereiches ausgebildet.

Der Entfernungssensor zur mindestens flächigen Überwachung eines Überwachungsbereiches ist ein Sensor zur Entfernungsmessung. Der Entfernungssensor liefert Entfernungswerte im mindestens zweidimensionalen Raum. Dabei gibt der Sensor Messwerte mit Distanzangaben und Winkelangaben aus. Beispielsweise wird die Entfernung mittels Lichtlaufzeitverfahren oder Triangulationsverfahren ermittelt.

Gemäß der Erfindung der Erfindung ist der Sensor zur mindestens räumlichen Überwachung eines Überwachungsbereiches ausgebildet.

In Weiterbildung der Erfindung erfolgt aufgrund der geprüften Positionsdaten mittels der Sicherheitssteuerung eine Veränderung der Sicherheitsfunktion der Sicherheitssteuerung.

Basierend auf übereinstimmenden Positionsdaten mittels der Sicherheitssteuerung erfolgt eine Veränderung der Sicherheitsfunktion des Sicherheitssystems.

Wenn beide Teilsysteme, also der Sensor und das Funkortungssystem eine stimmige und aufeinander zuordenbare Position liefern, dann kann eine vorbestimmte Position, welche beispielsweise abgespeichert ist erkannt sein und die Sicherheitssteuerung kann auf eine andere Schutzmaßnahme bzw. Sicherheitsfunktion umschalten. Das Umschalten der Schutzmaßnahme kann beispielsweise ein Umschalten von Messdatenkonturen, ein Umschalten von Schutzfeldern, eine Größen- oder Formanpassung von Messdatenkonturen oder Schutzfeldern und/oder eine Umschaltung der Eigenschaften eines Schutzfeldes umfassen. Zu den Eigenschaften eines Schutzfeldes gehören beispielsweise die Auflösung und/oder die Reaktionszeit des Schutzfeldes. Ein Umschalten der Schutzmaßnahme kann auch eine Sicherheitsfunktion, wie beispielsweise eine Kraftbegrenzung des Antriebs sein, auf die umgeschaltet wird.

In Weiterbildung der Erfindung werden mittels der Sicherheitssteuerung die geprüften Positionsdaten mit gespeicherten Positionsdaten eines Sicherheitspunktes auf Übereinstimmung geprüft und bei einer Übereinstimmung eine Veränderung der Sicherheitsfunktion des Sicherheitssystems erfolgt.

Der Sicherheitspunkt (Safe Point of Interest, SPol) ist eine vereinfachte Variante einer sicheren Positionierung, die sich auf eine Detektion besonderer Positionen in einer industriellen Anwendung beschränkt, an denen es erforderlich ist das Sicherheitssystem bzw. eine Schutzeinrichtung oder eine Sicherheitsfunktion der bewegbaren Maschine anzupassen, um sowohl einen Personenschutz wie auch eine Maschinenverfügbarkeit zu gewährleisten. Bei dem Sicherheitspunkt handelt es sich als synonyme Bezeichnung um einen Sicherheitsort, also keinen singularen Punkt.

Die Weiterbildung beruht darauf, dass ein Sicherheitspunkt durch zwei voneinander unabhängige Merkmale eindeutig identifizierbar ist. Diese Merkmale sind die Position welche durch das Funkortungssystem festgestellt wird, sowie die Position, welche durch den Sensor festgestellt wird. Damit wird der Sicherheitspunkt durch ein redundantes, insbesondere diversitäres System identifiziert.

In Weiterbildung der Erfindung ist der optoelektronische Sensor ein Entfernungssensor, ein Laserscanner, ein Sicherheitslaserscanner, eine 3D-Kamera, eine Stereokamera oder eine Lichtlaufzeitkamera.

Zur Positionserfassung überwacht der Laserscanner, der Sicherheitslaserscanner, die 3D-Kamera, die Stereokamera oder die Lichtlaufzeitkamera eine zweidimensionale oder dreidimensionale Messdatenkontur der Umgebung aus. Dabei kann es sich auch synonym um ein Überwachungsfeld handeln.

Zur Positionserfassung überwacht beispielsweise der Laserscanner, bzw. der Sicherheitslaserscanner eine Messdatenkontur.

In der Sicherheitstechnik eingesetzte Sicherheitssysteme müssen besonders zuverlässig und eigensicher arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS).

Zur Erfüllung dieser Sicherheitsnormen sind eine Reihe von Maßnahmen zu treffen, wie beispielsweise sichere elektronische Auswertung durch redundante und/oder diversitäre Elektronik oder verschiedene Funktionsüberwachungen, speziell die Überwachung der Verschmutzung optischer Bauteile einschließlich einer Frontscheibe. Ein Sicherheitslaserscanner entsprechend derartigen Normen ist beispielsweise aus der DE 43 40 756 A1 bekannt.

Der Begriff ,funktional sicher' ist im Sinne der genannten oder vergleichbaren Normen zu verstehen, es sind also Maßnahmen ergriffen, um Fehler bis zu einem spezifizierten Sicherheitsniveau zu beherrschen. Das Sicherheitssystem und/oder mindestens ein nicht sicherer Sensor erzeugen zudem nicht sichere Daten, wie Rohdaten, Punktwolken oder dergleichen. Nicht sicher ist der Gegenbegriff zu sicher, für nicht sichere Geräte, Übertragungswege, Auswertungen und dergleichen und dabei sind demnach die genannten Anforderungen an eine Fehlersicherheit nicht erfüllt.

Eine 3D-Kamera überwacht beispielsweise ebenfalls einen Überwachungsbereich der bewegbaren Maschine mittels einer Vielzahl von erfassten Distanzwerten. Eine 3D-Kamera hat den Vorteil, dass ein volumenartiger Schutzbereich überwacht werden kann.

Eine Stereokamera überwacht beispielsweise ebenfalls einen Überwachungsbereich der bewegbaren Maschine mittels einer Vielzahl von erfassten Distanzwerten. Die Distanzwerte werden auf Basis der zwei Kameras der Stereokamera ermittelt, die in einem Basisabstand zueinander montiert sind. Eine Stereokamera hat ebenso den Vorteil, dass ein volumenartiger Schutzbereich überwacht werden kann.

Mittels einer Lichtlaufzeitkamera werden Distanzwerte aufgrund der gemessenen Lichtlaufzeit ermittelt, welche von einem Bildsensor ermittelt werden. Eine Lichtlaufzeitkamera hat ebenso den Vorteil, dass ein volumenartiger bzw. räumlicher Schutzbereich überwacht werden kann.

In Weiterbildung der Erfindung ist der Sensor, insbesondere der optoelektronische Sensor an der bewegbaren Maschine angeordnet. Beispielsweise ist ein optoelektronischer Sensor an der Frontseite eines Fahrzeuges angeordnet, um Informationen aus der Umgebung zu erfassen. Es können auch mehrere optoelektronische Sensoren, insbesondere an den Ecken des Fahrzeuges angeordnet sein.

Dadurch kann das Fahrzeug seine eigene Position aufgrund von erkannten Konturen oder erkannten Position der Umgebung erfassen. Beispielsweise erfolgt einer Orientierung ausgehend von einem bekannten Ausgangspunkt oder Startpunkt der bewegbaren Maschine und wird dann fortlaufend anhand von detektierten Umgebungspositionen aktualisiert.

Die Sicherheitssteuerung ist in diesem Fall ebenfalls an der bewegbaren Maschine angeordnet und mit dem optoelektronischen Sensor verbunden.

In Weiterbildung der Erfindung weist das Sicherheitssystem mindestens einen zweiten Sensor auf, der in der Lage ist, eine Bewegung, eine Positionsänderung und/oder eine Geschwindigkeit zu messen. Der weitere Sensor ist dabei an der bewegbaren Maschine angeordnet. Der weitere zweite Sensor bildet neben dem ersten Sensor und dem Funkortungssystem einen Diagnosekanal zu Plausibilisierung der Position bzw. zum Testen bzw. Prüfen der ermittelten Positionsdaten. Der zweite Sensor selbst ermittelt keine Position, sondern dient zur sicherheitstechnischen Diagnose, ob die beiden Positionierungssysteme noch ordnungsgemäß arbeiten.

In Weiterbildung der Erfindung weist das Sicherheitssystem mindestens einen Encoder auf, welcher eine Drehposition einer drehenden Achse oder eines Rades erfasst, wobei der Encoder mit der Sicherheitssteuerung verbunden ist. Der weitere Encoder ist an der bewegbaren Maschine angeordnet. Der weitere Encoder bildet neben dem ersten Sensor und dem Funkortungssystem einen Diagnosekanal zu Überprüfung der Position bzw. zum Testen bzw. Prüfen der ermittelten Positionsdaten. Der Encoder selbst ermittelt keine Position, sondern dient zur sicherheitstechnischen Diagnose, ob die beiden Positionierungssysteme noch ordnungsgemäß arbeiten.

In Weiterbildung der Erfindung ist der Sensor stationär angeordnet und die Positionsdaten werden von dem Sensor an die bewegbare Maschine übermittelt.

Dadurch braucht die bewegbare Maschine bzw. das Fahrzeug gar keine Sensoren oder aktive Komponenten zur Positionsbestimmung aufweisen. Insbesondere sind mehrere stationäre Sensoren beabstandet entlang von Bewegungsbahnen der bewegbaren Maschine angeordnet, um eine Position des Fahrzeuges festzustellen.

Die Übermittlung der Positionsdaten an die bewegbare Maschine erfolgt bevorzugt über Funk. Jedoch kann auch eine optische Datenübertragung vorgesehen sein.

In Weiterbildung der Erfindung weist das Sicherheitssystem eine Karte oder ein Kartenmodel auf, wobei Sicherheitspunkte in der Karte oder dem Kartenmodell eingetragen sind und eine Navigation der beweg baren Maschine in der Karte oder dem Kartenmodel erfolgt.

Die aktuelle Position und/oder Lage der bewegbaren Maschine wird in der Sicherheitssteuerung aufgrund erfasster Umgebungskonturen kontinuierlich verarbeitet und die Karte oder das Kartenmodell aktualisiert. Die Karte weist ein Koordinatensystem auf. Diese Art der Positionsbestimmung wird als Simultaneous-Localisation-and-Mapping (kurz: SLAM) Methode bezeichnet. Dabei ist mindestens eine Position und eine zugehörige Orientierung in der Karte bekannt, bzw. eine Ursprungsposition und Ursprungsorientierung in der Karte bekannt. Erkannte Positionen und/oder Konturen werden in die Karte fortlaufend eingetragen, wodurch die Karte erweitert wird bzw. Veränderungen von beispielsweise Objekten und/oder Fahrwegen in die Karte eingetragen werden.

In Weiterbildung der Erfindung ist zwischen dem Sensor und der Sicherheitssteuerung eine erste Zonen-/Lokalisierungseinheit angeordnet ist, wobei die erste Zonen-/Lokalisierungseinheit Positionssignale des Sensors in binäre Daten umwandelt und/oder zwischen dem Funktransponder oder der Funkstation und der Sicherheitssteuerung eine zweite Zonen-/Lokalisierungseinheit angeordnet, wobei die zweite Zonen-/Lokalisierungseinheit Positionssignale des Funktransponders oder der Funkstation in binäre Daten umwandelt.

Dadurch kann eine einfachere Sicherheitssteuerung eingesetzt werden die nur binäre Signale verarbeiten kann. Dadurch ist die Auswahl an möglichen Sicherheitssteuerungen vergrößert.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1: ein Sicherheitssystem zur Lokalisierung einer bewegbaren Maschine;
- Figur 2 und 3: jeweils ein weiteres Sicherheitssystem;
- Figur 4: ein Sicherheitssystem zur Lokalisierung einer bewegbaren Maschine mit stationär angeordneten Entfernungssensoren.

In den nachfolgenden Figuren sind identische Teile mit identischen Bezugszeichen versehen.

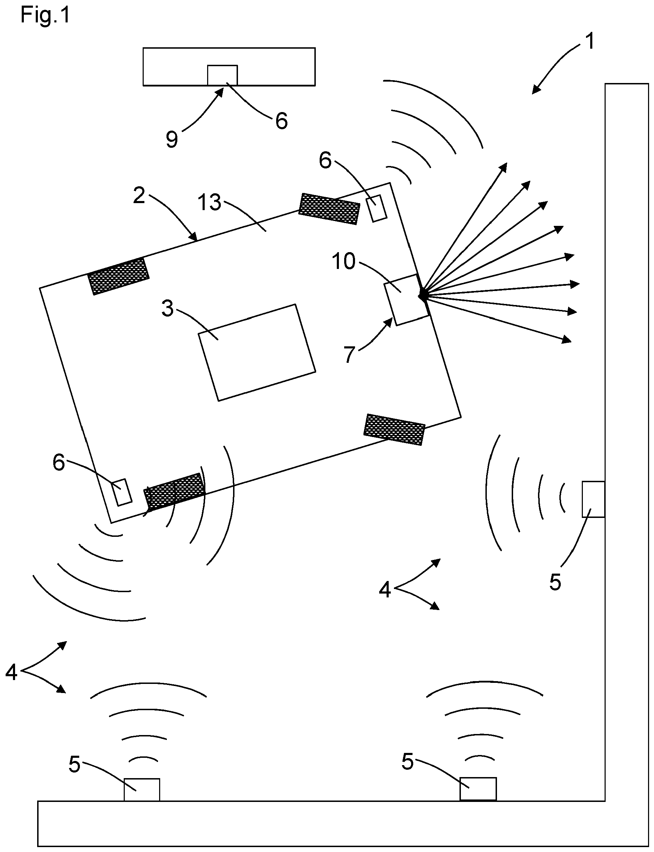

Figur 1 zeigt ein Sicherheitssystem 1 zur Lokalisierung einer bewegbaren Maschine 2, mit einer Sicherheitssteuerung 3, mit mindestens einem Funkortungssystem 4, mit mindestens einem Sensor 7 zur Positionsbestimmung, wobei das Funkortungssystem 4 stationär angeordnete Funkstationen 5 aufweist, wobei an der bewegbaren Maschine 2 mindestens ein Funktransponder 6 angeordnet ist oder wobei das Funkortungssystem stationär angeordnete Funktransponder aufweist, wobei an der bewegbaren Maschine mindestens drei Funkstationen angeordnet sind, wobei mittels dem Funkortungssystem 4 Positionsdaten der bewegbaren Maschine 2 ermittelbar sind, wobei die Positionsdaten von der Funkstation 5 oder dem Funktransponder 6 des Funkortungssystems 4 an die Sicherheitssteuerung 3 übermittelbar sind, und mittels dem Sensor 7 Positionsdaten der bewegbaren Maschine 2 ermittelbar sind, wobei die Sicherheitssteuerung 3 ausgebildet ist die Positionsdaten des Funkortungssystems 4 und die Positionsdaten des Sensors 7 zu vergleichen und bei einer Übereinstimmung geprüfte Positionsdaten gebildet werden.

Bei der bewegbaren Maschine 2 bzw. mobilen Maschine handelt es sich beispielsweise gemäß Figur 1 um ein führerloses Fahrzeug, fahrerloses Fahrzeug bzw. autonomes Fahrzeug 13. Das Fahrzeug 13 weist einen Antrieb auf und kann in verschiedenen Richtungen bewegt werden bzw. fahren.

Das Sicherheitssystem 1 wird mindestens durch die Sicherheitssteuerung 3, das Funkortungssystem 4 und den Sensor 7 gebildet.

Die Positionsdaten von dem Funkortungssystem 4 werden an die Sicherheitssteuerung 3 des Fahrzeuges 13 übermittelt. Damit können in der Sicherheitssteuerung 3 die Positionsdaten des Funkortungssystems 4 und die Positionsdaten des Sensors 7 verglichen werden und bei einer Übereinstimmung geprüfte Positionsdaten gebildet werden. Die geprüften Positionsdaten können dann von der Sicherheitssteuerung 3 weiterverarbeitet werden.

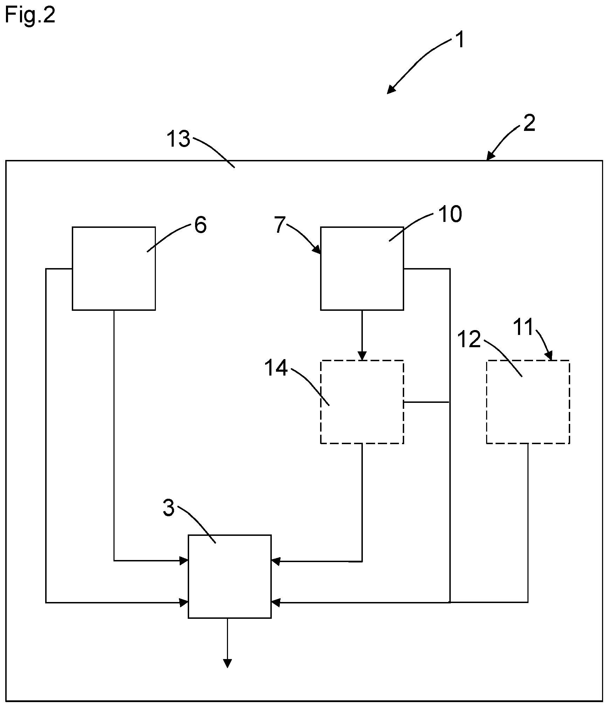

Gemäß Figur 2 weist die Sicherheitssteuerung 3 Eingänge, eine Verarbeitungseinheit und Ausgänge auf. An die Eingänge ist der Sensor 7 angeschlossen. Die Ausgänge sind mit Funktionseinheiten wie dem Antrieb, den Bremsen und/oder der Lenkung der bewegbaren Maschine bzw. des Fahrzeugs 13 verbunden. Die Sicherheitssteuerung 3 kann eine modulare Sicherheitssteuerung sein die über eine Software programmierbar ist.

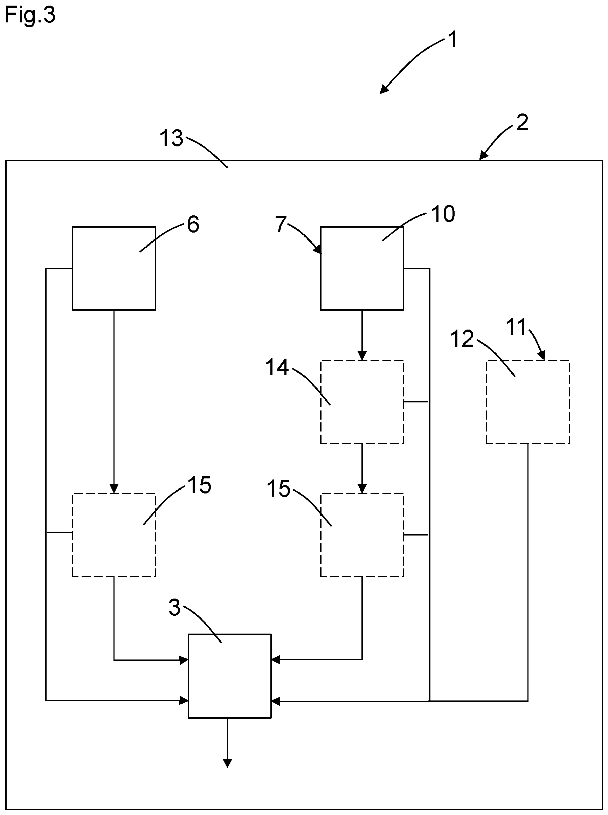

Gemäß Figur 3 kann eine Sicherheitssteuerung 3 beispielsweise nur binäre Eingänge aufweisen. Dabei werden die Signale, insbesondere Positionssignale des angeschlossenen Sensors 7 binär übertragen. Von einer Zonen-/Lokalisierungseinheit 15 werden die Positionsdaten in binäre Daten umgewandelt. Auch die Signale, insbesondere Positionssignale des Funkortungssystems 4 werden binär übertragen.

Der Sensor 7 kann auch gemäß Figur 2 direkt an ein Navigationssystem 14 angeschlossen sein, wobei das Navigationssystem 14 mit der Sicherheitssteuerung 3 verbunden ist. Dabei werden die Sensordaten des Sensors 7 vom Navigationssystem 14 verarbeitet und gebildete Positionsdaten an die Sicherheitssteuerung 3 übertragen.

Jedoch kann die Sicherheitssteuerung 3 auch Eingänge bzw. Schnittstellen aufweisen, wobei Daten, beispielsweise Datenbytes oder Daten mit komplexeren Datenstrukturen eingelesen werden können.

Bei den Ausgängen der Sicherheitssteuerung 3 kann es sich insbesondere um redundante Sicherheitsausgänge handeln. Dabei handelt es sich beispielsweise um halbleitergesteuerte Schaltausgänge, um beispielsweise den Antrieb des Fahrzeugs 13 sicher abzuschalten.

Gemäß Figur 1 ist eine Position des Fahrzeugs 13 durch zwei voneinander unabhängige Merkmale eindeutig identifizierbar. Diese Merkmale sind die Position die über den Sensor 7 ermittelt wird, sowie die Position, welche über das Funkortungssystem 4 ermittelt wird. Damit wird die Position durch ein redundantes, insbesondere diversitäres System bestimmt.

Die Funkortung basiert dabei auf einer Triangulation von mindestens einem Funktransponder 6 an dem Fahrzeug 13. Hierzu sind mindestens drei Funkstationen 5 notwendig die den Funktransponder 6 erfassen können. Dabei ist dem Funkortungssystem 4 der Abstand zwischen den zwei Funkstationen 5 bekannt.

Der Sensor 7 ist beispielsweise dazu ausgebildet Reflektoren zu detektieren die an bestimmten Positionen befestigt sind, so dass bei der Detektion von mindestens einem Reflektor die Position des Fahrzeugs 13 durch den an der Sicherheitssteuerung 3 angeschlossenen Sensor 7 festgestellt werden kann.

Gemäß Figur 1 ist das Funkortungssystem 4 ein Ultrabreitband-Funkortungssystem, wobei die verwendete Frequenz im Bereich von 3,1 GHz bis 10,6 GHz ist, wobei die Sendeenergie maximal 0,5 mW beträgt. Die Reichweite eines derartigen Funkortungssystems 4 beträgt 0 bis 50 m.

An dem Fahrzeug 13 muss minimal nur ein einziger Funktransponder 6 angeordnet sein, der von mindestens zwei stationär angeordneten Funkstationen 5 erfasst wird, wobei der Abstand der Funkstationen 5 bekannt ist.

Gemäß Figur 1 sind drei Funkstationen 5 angeordnet, welche mindestens einen Teil des Bewegungsbereichs des Fahrzeugs 13 überwachen. Gemäß Figur 1 sind beispielsweise zwei Funktransponder 6 an dem Fahrzeug 13 angeordnet.

Gemäß Figur 1 ist der Sensor 7 als optoelektronischer Sensor 7, insbesondere als Entfernungssensor zur mindestens flächigen Überwachung eines Überwachungsbereiches ausgebildet. Der Entfernungssensor liefert Entfernungswerte im mindestens zweidimensionalen Raum. Dabei gibt der Sensor Messwerte mit Distanzangaben und Winkelangaben aus. Beispielsweise wird die Entfernung mittels Lichtlaufzeitverfahren ermittelt.

Gemäß Figur 1 erfolgt aufgrund der geprüften Positionsdaten mittels der Sicherheitssteuerung 3 eine Veränderung der Sicherheitsfunktion der Sicherheitssteuerung bzw. des Sicherheitssystems.

Wenn beide Teilsysteme, also der optoelektronische Sensor 7 und das Funkortungssystem 4 eine stimmige und aufeinander zuordenbare Position liefern, dann kann eine vorbestimmte Position, welche beispielsweise abgespeichert ist erkannt werden und die Sicherheitssteuerung 3 kann auf eine andere Schutzmaßnahme bzw. Sicherheitsfunktion umschalten. Das Umschalten der Schutzmaßnahme kann beispielsweise ein Umschalten von Messdatenkonturen, eine Größen- oder Formanpassung von Messdatenkonturen und/oder eine Umschaltung der Eigenschaften einer Messdatenkontur umfassen. Zu den Eigenschaften einer Messdatenkontur gehören beispielsweise die Auflösung und/oder die Reaktionszeit der Messdatenkontur. Ein Umschalten der Schutzmaßnahme kann auch eine Sicherheitsfunktion, wie beispielsweise eine Kraftbegrenzung des Antriebs sein, auf die umgeschaltet wird.

Gemäß Figur 1 werden mittels der Sicherheitssteuerung 3 die geprüften Positionsdaten mit gespeicherten Positionsdaten eines Sicherheitspunktes 9 auf Übereinstimmung geprüft und bei einer Übereinstimmung erfolgt eine Veränderung der Sicherheitsfunktion des Sicherheitssystems 1.

Der Sicherheitspunkt 9 (Safe Point of Interest, SPol) ist eine vereinfachte Variante einer sicheren Positionierung, die sich auf eine Detektion besonderer Positionen in einer industriellen Anwendung beschränkt, an denen es erforderlich ist das Sicherheitssystem 1 bzw. eine Schutzeinrichtung oder eine Sicherheitsfunktion des Fahrzeugs 13 anzupassen, um sowohl einen Personenschutz wie auch eine Maschinenverfügbarkeit zu gewährleisten. Beispielsweise ist der Sicherheitspunkt der Anfang einer Förderstrecke oder eines Förderbandes. An dem Sicherheitspunkt 9 kann ein Funktransponder 6 angeordnet sein.

Gemäß Figur 1 ist der Sicherheitspunkt 9 durch zwei voneinander unabhängige Merkmale eindeutig identifizierbar. Diese Merkmale sind die Position welche durch das Funkortungssystem 4 festgestellt wird, sowie die Position, welche durch den Laserscanner 10 festgestellt wird. Damit wird der Sicherheitspunkt 9 durch ein redundantes, insbesondere diversitäres System identifiziert.

Gemäß Figur 1 kann anstatt des Laserscanners 10 als Entfernungssensor auch eine 3D-Kamera, eine Stereokamera oder eine Lichtlaufzeitkamera angeordnet sein.

Zur Positionserfassung überwacht der Laserscanner 10 eine zweidimensionale Messdatenkontur. Gemäß Figur 1 ist der Laserscanner 10 an dem Fahrzeug 13 angeordnet. Der Laserscanner 10 ist an der Frontseite des Fahrzeuges 13 angeordnet, um Informationen aus der Umgebung zu erfassen. Es können auch mehrere Laserscanner 10, insbesondere an den Ecken des Fahrzeuges 13 angeordnet sein.

Dadurch kann das Fahrzeug 13 seine eigene Position aufgrund von erkannten Konturen oder erkannten Position der Umgebung erfassen. Beispielsweise erfolgt einer Orientierung ausgehend von einem bekannten Ausgangspunkt oder Startpunkt des Fahrzeugs und wird dann fortlaufend anhand von detektierten Umgebungspositionen aktualisiert.

Die Sicherheitssteuerung 3 ist in diesem Fall ebenfalls an dem Fahrzeug 13 angeordnet und mit dem optoelektronischen Sensor 7 verbunden.

Optional weist das Sicherheitssystem 1 gemäß Figur 2 mindestens einen zweiten Sensor 11 auf, der in der Lage ist, eine Bewegung, eine Positionsänderung und/oder eine Geschwindigkeit zu messen. Der weitere Sensor 11 ist dabei an dem Fahrzeug 13 angeordnet. Der weitere Sensor 11 bildet neben dem optoelektronischen Sensor 7 und dem Funkortungssystem 4 einen Diagnosekanal zu Plausibilisierung der Position bzw. zum Testen bzw. Prüfen der ermittelten Positionsdaten.

Optional weist das Sicherheitssystem gemäß Figur 2 mindestens einen Encoder 12 auf, welcher eine Drehposition eines Rades erfasst, wobei der Encoder 12 mit der Sicherheitssteuerung 3 verbunden ist. Der Encoder 12 ist an dem Fahrzeug 13 angeordnet. Der Encoder 12 bildet neben dem optoelektronischen Sensor 7 und dem Funkortungssystem 4 einen Diagnosekanal zu Plausibilisierung der Position bzw. zum Testen bzw. Prüfen der ermittelten Positionsdaten. Der Encoder selbst ermittelt keine Position, sondern dient zur sicherheitstechnischen Diagnose, ob die beiden Positionierungssysteme noch ordnungsgemäß arbeiten.

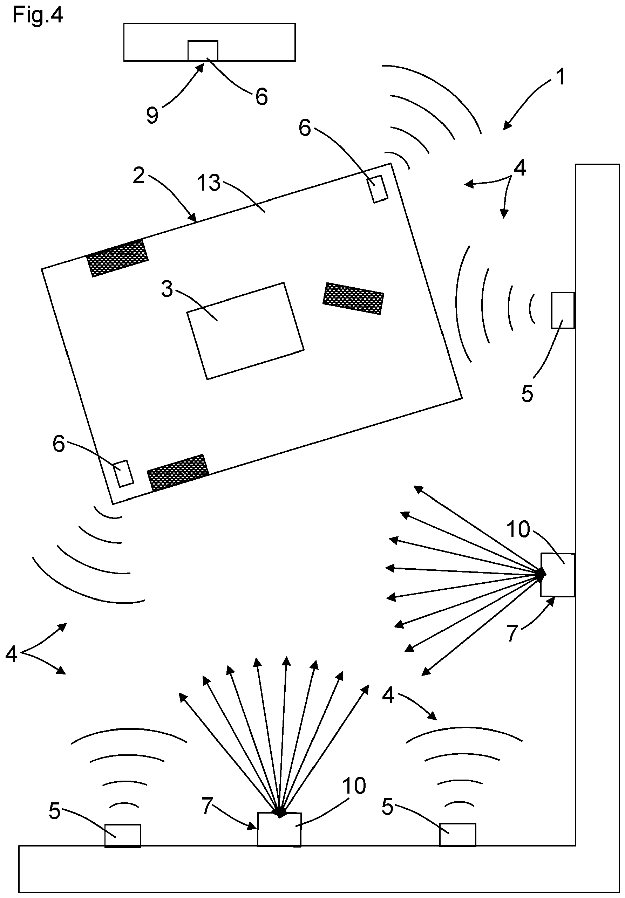

Gemäß Figur 4 ist der Sensor 7 stationär angeordnet und die Positionsdaten werden von dem Sensor 7 bzw. einem optoelektronischen Sensor an das Fahrzeug 13 übermittelt.

Dadurch braucht das Fahrzeug 13 gar keine Sensoren oder aktive Komponenten zur Positionsbestimmung aufweisen. Insbesondere sind mehrere stationäre optoelektronische Sensoren 7 beabstandet entlang von Bewegungsbahnen des Fahrzeuges 13 angeordnet, um eine Position des Fahrzeuges 13 festzustellen.

Die Übermittlung der Positionsdaten an das Fahrzeug 13 erfolgt bevorzugt über Funk. Jedoch kann auch eine optische Datenübertragung vorgesehen sein.

In einer nicht dargestellten Ausführungsform weist das Sicherheitssystem eine Karte oder ein Kartenmodel auf, wobei Sicherheitspunkte in der Karte oder dem Kartenmodell eingetragen sind.

Die aktuelle Position und/oder Lage der bewegbaren Maschine wird in der Sicherheitssteuerung aufgrund erfasster Umgebungskonturen kontinuierlich verarbeitet und die Karte oder das Kartenmodell aktualisiert. Die Karte weist ein Koordinatensystem auf. Diese Art der Positionsbestimmung wird als Simultaneous-Localisation-and-Mapping (kurz: SLAM) Methode bezeichnet. Dabei ist mindestens eine Position und eine zugehörige Orientierung in der Karte bekannt, bzw. eine Ursprungsposition und Ursprungsorientierung in der Karte bekannt. Erkannte Positionen und/oder Konturen werden in die Karte fortlaufend eingetragen, wodurch die Karte erweitert wird bzw. Veränderungen von beispielsweise Objekten und/oder Fahrwegen in die Karte eingetragen werden.

### Bezugszeichen:

1 Sicherheitssystem
2 bewegbare Maschine
3 Sicherheitssteuerung
4 Funkortungssystem
5 Funkstationen
6 Funktransponder
7 Sensor oder optoelektronischer Sensor
8 Entfernungssensor
9 Sicherheitspunkt
10 Laserscanner
11 zweiter Sensor
12 Encoder
13 Fahrzeug
14 Navigationssystem
15 Zonen-/Lokalisierungseinheit

## Patentansprüche

1. Sicherheitssystem (1) zur Lokalisierung einer bewegbaren Maschine (2), mit einer Sicherheitssteuerung (3), mit mindestens einem Funkortungssystem (4), mit mindestens einem Sensor (7) zur Positionsbestimmung,
wobei
das Funkortungssystem (4) stationär angeordnete Funkstationen (5) aufweist, wobei an der bewegbaren Maschine mindestens ein Funktransponder (6) angeordnet ist,
oder wobei das Funkortungssystem stationär angeordnete Funktransponder aufweist, wobei an der bewegbaren Maschine mindestens drei Funkstationen angeordnet sind,
wobei mittels dem Funkortungssystem (4) Positionsdaten der bewegbaren Maschine (2) ermittelbar sind,
wobei die Positionsdaten von der Funkstation (5) oder dem Funktransponder (6) des Funkortungssystems (4) an die Sicherheitssteuerung (3) übermittelbar sind,
und mittels dem Sensor (7) Positionsdaten der bewegbaren Maschine (2) ermittelbar sind,
**dadurch gekennzeichnet, dass** die Sicherheitssteuerung (3) ausgebildet ist, die Positionsdaten des Funkortungssystems (4) und die Positionsdaten des Sensors (7) zu vergleichen und bei einer Übereinstimmung geprüfte Positionsdaten zu bilden, wodurch die Position durch ein redundantes und diversitäres System bestimmt wird, wobei Ausgänge der Sicherheitssteuerung (3) redundante Sicherheitsausgänge sind, wobei der Sensor zur mindestens flächigen Überwachung eines Überwachungsbereiches ausgebildet ist und/oder der Sensor zur mindestens räumlichen Überwachung eines Überwachungsbereiches ausgebildet ist, wobei das Funkortungssystem (4) ein Ultrabreitband-Funkortungssystem ist, wobei die verwendete Frequenz im Bereich von 3,1 GHz bis 10,6 GHz ist, wobei die Sendeenergie pro Funkstation (5) maximal 0,5 mW beträgt.

2. Sicherheitssystem (1) nach mindestens einem der vorhergehenden Ansprüche, **dadurch gekennzeichnet, dass** der Sensor (7) ein optoelektronischer Sensor, ein Ultraschallsensor oder ein Radarsensor ist.

3. Sicherheitssystem (1) nach mindestens einem der vorhergehenden Ansprüche, **dadurch gekennzeichnet, dass** aufgrund der geprüften Positionsdaten mittels der Sicherheitssteuerung (3) eine Veränderung der Sicherheitsfunktion des Sicherheitssystems (1) erfolgt.

4. Sicherheitssystem (1) nach mindestens einem der vorhergehenden Ansprüche, **dadurch gekennzeichnet, dass** mittels der Sicherheitssteuerung (3) geprüften Positionsdaten mit gespeicherten Positionsdaten eines Sicherheitspunktes (9) auf Übereinstimmung geprüft werden und bei einer Übereinstimmung eine Veränderung der Sicherheitsfunktion des Sicherheitssystems (1) erfolgt.

5. Sicherheitssystem (1) nach mindestens einem der vorhergehenden Ansprüche, **dadurch gekennzeichnet, dass** der optoelektronische Sensor (7) ein Entfernungssensor (8), ein Laserscanner (10), ein Sicherheitslaserscanner, eine 3D-Kamera, eine Stereokamera oder eine Lichtlaufzeitkamera ist.

6. Sicherheitssystem (1) nach mindestens einem der vorhergehenden Ansprüche, **dadurch gekennzeichnet, dass** der Sensor (7) an der bewegbaren Maschine angeordnet ist.

7. Sicherheitssystem (1) nach mindestens einem der vorhergehenden Ansprüche, **dadurch gekennzeichnet, dass** das Sicherheitssystem (1) mindestens einen zweiten Sensor (11) aufweist, der in der Lage ist, eine Bewegung, eine Positionsänderung und/oder eine Geschwindigkeit zu messen.

8. Sicherheitssystem (1) nach mindestens einem der vorhergehenden Ansprüche, **dadurch gekennzeichnet, dass** das Sicherheitssystem (1) mindestens einen Encoder (12) aufweist, welcher eine Drehposition einer drehenden Achse oder eines Rades erfasst, wobei der Encoder (12) mit der Sicherheitssteuerung (3) verbunden ist.

9. Sicherheitssystem (1) nach mindestens einem der vorhergehenden Ansprüche, **dadurch gekennzeichnet, dass** der Sensor (7) stationär angeordnet ist und die Positionsdaten von dem Sensor (7) an die bewegbare Maschine übermittebar sind.

10. Sicherheitssystem (1) nach mindestens einem der vorhergehenden Ansprüche, **dadurch gekennzeichnet, dass** das Sicherheitssystem (1) eine Karte oder ein Kartenmodel aufweist, wobei der mindestens ein Sicherheitspunkt (9) in der Karte oder dem Kartenmodel eingetragen ist und eine Navigation der beweg baren Maschine in der Karte oder dem Kartenmodel erfolgt.

11. Sicherheitssystem (1) nach mindestens einem der vorhergehenden Ansprüche, **dadurch gekennzeichnet, dass** zwischen dem Sensor und der Sicherheitssteuerung eine erste Zonen-/Lokalisierungseinheit angeordnet ist, wobei die erste Zonen-/Lokalisierungseinheit Positionssignale des Sensors in binäre Daten umwandelt und/oder zwischen dem Funktransponder oder der Funkstation und der Sicherheitssteuerung eine zweite Zonen-/Lokalisierungseinheit angeordnet ist, wobei die zweite Zonen-/Lokalisierungseinheit Positionssignale des Funktransponders oder der Funkstation in binäre Daten umwandelt.

## Claims

1. A safety system (1) for the localization of a movable machine (2), comprising
a safety controller (3); at least one radio location system (4); and at least one sensor (7) for position determination,
wherein
the radio location system (4) has radio stations (5) arranged in a stationary manner, wherein at least one radio transponder (6) is arranged at the movable machine,
or wherein the radio location system has radio transponders arranged in a stationary manner, wherein at least three radio stations are arranged at the movable machine,
wherein position data of the movable machine (2) can be determined by means of the radio location system (4),
wherein the position data can be transmitted from the radio station (5) or the radio transponder (6) of the radio location system (4) to the safety controller (3),
and position data of the movable machine (2) can be determined by means of the sensor (7),
**characterized in that** the safety controller (3) is configured to compare the position data of the radio location system (4) and the position data of the sensor (7) and, in the event of an agreement, to form checked position data, whereby the position is determined by a redundant and diverse system, with outputs of the safety controller (3) being redundant safety outputs, with the sensor being configured for an at least areal monitoring of a monitored zone and/or the sensor being configured for an at least spatial monitoring of a monitored zone, with the radio location system (4) being an ultra-broadband radio location system, with the frequency used being in a range from 3.1 GHz to 10.6 GHz, with the transmission energy per radio station (5) amounting to at most 0.5 mW.

2. A safety system (1) in accordance with at least one of the preceding claims, **characterized in that** the sensor (7) is an optoelectronic sensor, an ultrasonic sensor or a radar sensor.

3. A safety system (1) in accordance with at least one of the preceding claims, **characterized in that** a change in the safety function of the safety system (1) takes place on basis of the checked position data by means of the safety controller (3).

4. A safety system (1) in accordance with at least one of the preceding claims, **characterized in that** position data checked by means of the safety controller (3) are checked for an agreement with stored position data of a safety point (9) and, in the event of an agreement, a change in the safety function of the safety system (1) takes place.

5. A safety system (1) in accordance with at least one of the preceding claims, **characterized in that** the optoelectronic sensor (7) is a distance sensor (8), a laser scanner (10), a safety laser scanner, a 3D camera, a stereo camera or a time-of-flight camera.

6. A safety system (1) in accordance with at least one of the preceding claims, **characterized in that** the sensor (7) is arranged at the movable machine.

7. A safety system (1) in accordance with at least one of the preceding claims, **characterized in that** the safety system (1) has at least one second sensor (11) which is capable of measuring a movement, a position change and/or a speed.

8. A safety system (1) in accordance with at least one of the preceding claims, **characterized in that** the safety system (1) has at least one encoder (12) which detects a rotational position of a rotating axle or of a wheel, with the encoder (12) being connected to the safety controller (3).

9. A safety system (1) in accordance with at least one of the preceding claims, **characterized in that** the sensor (7) is arranged in a stationary manner and the position data can be transmitted from the sensor (7) to the movable machine.

10. A safety system (1) in accordance with at least one of the preceding claims, **characterized in that** the safety system (1) has a map or a map model, with the at least one safety point (9) being entered in the map or the map model and a navigation of the movable machine taking place in the map or the map model.

11. A safety system (1) in accordance with at least one of the preceding claims, **characterized in that** a first zone unit/localization unit is arranged between the sensor and the safety controller, with the first zone unit/localization unit converting position signals of the sensor into binary data and/or a second zone unit/localization unit being arranged between the radio transponder or the radio station and the safety controller, with the second zone unit/localization unit converting position signals of the radio transponder or of the radio station into binary data.

## Revendications

1. Système de sécurité (1) pour localiser une machine mobile (2), comprenant une unité de commande de sécurité (3), au moins un système de radiolocalisation (4), au moins un capteur (7) pour déterminer la position,
dans lequel
le système de radiolocalisation (4) présente des stations radio (5) disposées de manière stationnaire, au moins un transpondeur radio (6) étant disposé sur la machine mobile,
ou le système de radiolocalisation présente des transpondeurs radio disposés de manière stationnaire, au moins trois stations radio étant disposées sur la machine mobile,
des données de position de la machine mobile (2) peuvent être déterminées au moyen du système de radiolocalisation (4),
les données de position peuvent être transmises de la station radio (5) ou du transpondeur radio (6) du système de radiolocalisation (4) à l'unité de commande de sécurité (3),
et des données de position de la machine mobile (2) peuvent être déterminées au moyen du capteur (7),
**caractérisé en ce que**
l'unité de commande de sécurité (3) est réalisée pour comparer les données de position du système de radiolocalisation (4) et les données de position du capteur (7) et pour, en cas de concordance, former des données de position vérifiées, grâce à quoi la position est définie par un système redondant et diversitaire, les sorties de l'unité de commande de sécurité (3) étant des sorties de sécurité redondantes, le capteur étant réalisé pour une surveillance au moins surfacique d'une zone à surveiller et/ou le capteur étant réalisé pour une surveillance au moins spatiale d'une zone à surveiller, le système de radiolocalisation (4) étant un système de radiolocalisation à bande ultralarge, la fréquence utilisée étant dans la plage de 3,1 GHz à 10,6 GHz, l'énergie d'émission par station radio (5) étant au maximum de 0,5 mW.

2. Système de sécurité (1) selon la revendication précédente, **caractérisé en ce que** le capteur (7) est un capteur optoélectronique, un capteur à ultrasons ou un capteur radar.

3. Système de sécurité (1) selon l'une au moins des revendications précédentes, **caractérisé en ce qu'**une modification de la fonction de sécurité du système de sécurité (1) est effectuée au moyen de l'unité de commande de sécurité (3) sur la base des données de position vérifiées.

4. Système de sécurité (1) selon l'une au moins des revendications précédentes, **caractérisé en ce que** les données de position vérifiées au moyen de l'unité de commande de sécurité (3) sont vérifiées quant à leur concordance avec les données de position mémorisées d'un point de sécurité (9) et, en cas de concordance, une modification de la fonction de sécurité du système de sécurité (1) est effectuée.

5. Système de sécurité (1) selon l'une au moins des revendications précédentes, **caractérisé en ce que** le capteur optoélectronique (7) est un capteur de distance (8), un scanner laser (10), un scanner laser de sécurité, une caméra 3D, une caméra stéréo ou une caméra à temps de vol de lumière.

6. Système de sécurité (1) selon l'une au moins des revendications précédentes, **caractérisé en ce que** le capteur (7) est disposé sur la machine mobile.

7. Système de sécurité (1) selon l'une au moins des revendications précédentes, **caractérisé en ce que** le système de sécurité (1) comporte au moins un deuxième capteur (11) apte à mesurer un mouvement, un changement de position et/ou une vitesse.

8. Système de sécurité (1) selon l'une au moins des revendications précédentes, **caractérisé en ce que** le système de sécurité (1) comporte au moins un encodeur (12) détectant une position de rotation d'un axe ou d'une roue en rotation, l'encodeur (12) étant relié à l'unité de commande de sécurité (3).

9. Système de sécurité (1) selon l'une au moins des revendications précédentes, **caractérisé en ce que** le capteur (7) est disposé de manière stationnaire et les données de position peuvent être transmises du capteur (7) à la machine mobile.

10. Système de sécurité (1) selon l'une au moins des revendications précédentes, **caractérisé en ce que** le système de sécurité (1) présente une carte ou un modèle de carte, ledit au moins un point de sécurité (9) étant inscrit dans la carte ou dans le modèle de carte, et une navigation de la machine mobile étant effectuée dans la carte ou dans le modèle de carte.

11. Système de sécurité (1) selon l'une au moins des revendications précédentes, **caractérisé en ce qu'**une première unité de zone/localisation est disposée entre le capteur et l'unité de commande de sécurité, la première unité de zone/localisation convertissant des signaux de position du capteur en données binaires, et/ou une deuxième unité de zone/localisation est disposée entre le transpondeur radio ou la station radio et l'unité de commande de sécurité, la deuxième unité de zone/localisation convertissant des signaux de position du transpondeur radio ou de la station radio en données binaires.
